# EUROPÄISCHE PATENTSCHRIFT

(11) **EP 2 659 168 B1**
(45) Veröffentlichungstag und Bekanntmachung des Hinweises auf die Patenterteilung: **12.11.2014**
(21) Anmeldenummer: 11793846.4
(22) Anmeldetag: 13.12.2011
(51) Int. Cl.: F16K 3/08, F16K 11/074, F16K 27/04, F16K 31/00

(54) **VENTIL ZUR STEUERUNG VON VOLUMENSTRÖMEN**
VALVE FOR CONTROLLING VOLUME FLOWS
SOUPAPE DE COMMANDE DE DÉBITS VOLUMÉTRIQUES

(30) Priorität: 29.12.2010 DE 102010064304
(43) Veröffentlichungstag der Anmeldung: 06.11.2013
(73) Patentinhaber: Robert Bosch GmbH, 70442 Stuttgart (DE)
(72) Erfinder: TAGHOUTI, Nizar, 76137 Karlsruhe (DE); BIEL, Dominik, 76456 Kuppenheim (DE); HARTINGER, Markus, 67100 Strasbourg (FR); HERRMANN, Ralf, 77880 Sasbach (DE); REEB, Georg, 77815 Buehl Eisental (DE); BRANDES, Joerg, 76534 Baden-Baden (DE); MERZ, Harald, 76547 Sinzheim (DE)
(86) Internationale Anmeldenummer: PCT/EP2011/072662
(87) Internationale Veröffentlichungsnummer: WO 2012/089500

(56) Entgegenhaltungen:
- DE-A1-102006 053 307
- DE-A1-102008 029 706
- US-A1- 2003 070 714

## Beschreibung

Die Erfindung betrifft ein Ventil zur Steuerung von Volumenströmen nach der Gattung des unabhängigen Anspruchs.

### Stand der Technik

Ein Kühl- bzw. Heizkreislauf eines Kraftfahrzeuges beinhaltet in der Regel eine zu kühlende Wärmequelle, beispielsweise eine Brennkraftmaschine eines Kraftfahrzeugs, die mittels eines Kühlmediums durch freie oder erzwungene Konvektion gekühlt werden soll. Die Temperaturdifferenz über der Wärmequelle ist vom Wärmeeintrag und von der Größe des Volumenstroms des Kühlmittels abhängig, während die absolute Temperatur des Kühlmediums durch den Wärmeeintrag der Wärmequelle, die Wärmeabfuhr über etwaige, im Kühlkreislauf befindliche Kühlerelemente und die Wärmekapazitäten der beteiligten Materialien bestimmt wird. Um einerseits die Brennkraftmaschine vor dem Überhitzen zu schützen und andererseits die Abwärme der Brennkraftmaschine beispielsweise zur Beheizung des Fahrgastraumes nutzen zu können, wird im Kraftfahrzeug ein Kühlmittel umgepumpt, das die überschüssige Wärmeenergie der Brennkraftmaschine aufnimmt und in gewünschtem Maße abführt.

Der Heiz- bzw. Kühlkreislauf eines Kraftfahrzeuges umfasst in der Regel verschiedene Teilkreisläufe, wie beispielsweise einen Kühlerzweig, einen Bypass-Zweig und/oder auch einen Heizungswärmetauscherzweig. Über einen im Kühlerzweig angeordneten Kühler oder Radiator kann die überflüssige Wärmemenge des Kühlmittels an die Umgebungsluft abgegeben werden. Ein Heizungswärmetauscher macht andererseits die zur Verfügung stehende Wärmemenge des Kühlmittels zur Beheizung des Fahrgastraumes nutzbar. Die Verteilung des Kühlmittelstromes auf die verschiedenen Zweige des Kühl- bzw. Heizkreislaufes wird dabei üblicherweise durch zumindest ein Ventil gesteuert.

Hierzu wird in der DE 10 2006 053 310 A1 vorgeschlagen, die gewünschte Kühlmitteltemperatur durch das Mischen eines gekühlten und eines ungekühlten Kühlmittelstroms einzustellen. Dazu wird ein Steuerventil verwendet, dessen Durchströmöffnungen durch ein Verdrehen veränderlich sind. Um die Durchströmöffnungen zu verstellen, ist in dem Steuerventil ein Elektromotor angeordnet, der über ein Schneckengetriebe die Position einer Ventilscheibe so verstellt, dass durch das Steuerventil ein gewünschter Kühlmittelstrom strömt. Der Elektromotor ist dabei nicht vom Kühlmittelstrom getrennt, sodass die Komponenten des Elektromotors, wie etwa der Rotor und das Getriebe, mit Kühlmittel umflutet sind.

Aus der US 5, 950, 576 ist ferner ein Proportionalkühlmittelventil bekannt, dessen Ventilkörper scheibenförmig ausgebildet ist und eine Mehrzahl von Durchtrittsöffnungen aufweist, die es erlauben, die gewünschten Verbindungen zwischen dem Einlasskanal des Ventils und mehreren Auslasskanälen herzustellen. Die Ventilscheibe der US 5, 950, 576 wird mittels einer Welle über einen elektromechanischen Aktuator entsprechend den Vorgaben eines Verbrennungsmotor-Steuergerätes gestellt.

Aus der DE 10 2006 053 307 A1 ist ferner bekannt, die Öffnungen der Ventilscheibe durch Dichtelemente in Form von Dichtringen, sowie mit Federelementen, die das Dichtelement an die Ventilscheibe andrücken, zu realisieren, sodass die Leckageraten bei einem geschlossenen Kühlkreislauf nahezu Null sind.

Bei Ausfall der Versorgungsspannung ist bei den obigen Ventilen eine Verstellung der Ventilscheibe nicht mehr möglich, so dass diese keine definierte Position einnehmen kann. Daher kann es passieren, dass der Verbrennungsmotor überhitzt, weil das Ventil in einer Stellung stehen bleibt, in der nicht ausreichend Kühlmittel zirkulieren kann. Im Extremfall bleibt das Ventil in Vollabsperrung stehen, so dass keine Kühlung mehr möglich ist.

### Offenbarung der Erfindung

Es ist Aufgabe der Erfindung, ein energie- und platzsparendes Notlaufkonzept für ein Ventil mit einer um die Achse einer Welle drehbar angeordneten Ventilscheibe vorzusehen, mit dem eine Zirkulation des Kühlmittels auch bei Ausfall der Versorgungsspannung gegeben ist.

Das Ventil zur Steuerung von Volumenströmen eines Kühlmittels in einem Heiz- und/oder Kühlsystem eines Kraftfahrzeuges weist ein Ventilgehäuse mit mindestens einem Einlasskanal sowie mindestens einem Auslasskanal auf. In dem Ventilgehäuse ist mindestens eine, um die Achse einer Welle drehbar angeordnete Ventilscheibe vorhanden, die die Verbindung zwischen dem mindestens einem Einlasskanal und dem mindestens einen Auslasskanal des Ventils beeinflusst. Erfindungsgemäß ist vorgesehen, dass in dem Ventilgehäuse zwischen dem mindestens einen Einlasskanal und dem mindestens einen Auslasskanal ein Bypass-Kanal sowie ein Bypass-Ventil mit einem passiven Magnetkreis sowie einem durch die Ventilscheibe angetriebenen Rückstellmechanismus angeordnet sind, über die der mindestens eine Einlasskanal und der mindestens eine Auslasskanal im Falle einer Überhitzung des Kühlmittels miteinander verbindbar sind. In vorteilhafter Weise ergibt sich hierdurch die Möglichkeit, einer unverzögerten Reaktion im Falle der Überhitzung, während übliche thermisch gesteuerte Einrichtungen entweder verzögert oder gar nicht auf ansteigende Temperaturen der Brennkraftmaschine reagieren, da sie thermisch nicht optimal an das System angekoppelt sind. Durch den passiven Magnetkreis des Bypass-Ventils in Verbindung mit dem Rückstellmechanismus der Ventilscheibe ist zudem im Vergleich zu handelsüblichen Magnetventilen mit einem Verstellbereich in der Größenordnung von ca. 4 mm ein sehr geringer Energie- und Raumbedarf für das erfindungsgemäße Bypass-Ventil erzielbar.

Weitere Vorteile der Erfindung ergeben sich durch die in den abhängigen Ansprüchen angegebenen Merkmale sowie aus der Zeichnung und der nachfolgenden Beschreibung.

In vorteilhafter Weise enthält der passive Magnetkreis des Bypass-Ventils einen kleinen Haftmagneten, der lediglich zum Halten des Bypass-Ventils in einer definierten Endposition dient. Darüber hinaus weist der passive Magnetkreis des Bypass-Ventils einen Verstellbereich von wenigen Zehntel Millimetern, insbesondere < 0,1 mm, auf. Dadurch ist es möglich, den Magnekreis sehr klein, leicht und kostengünstig auszuführen.

Darüber hinaus wird der Energiebedarf für das Bypass-Ventil extrem gering gehalten, wenn der Rückstellmechanismus einen mit der Welle drehfest verbundenen Mitnehmer umfasst, der außerhalb des Regelbereichs des Ventils einen mit einem Rückschlusselement verbundenen Ventilteller des Bypass-Ventils derart in einen Dichtsitz verschiebt, dass das Rückschlusselement in den Wirkbereich des Magnetkreises gelangt. Dabei hält der passive Magnetkreis das Bypass-Ventil selbsttätig in der geschlossenen Position, wenn der Ventilteller durch den Rückstellmechanismus in seinen Dichtsitz verschoben ist.

In einer ersten vorteilhaften Ausgestaltungsform weist der Mitnehmer eine radiale Ausbuchtung auf, die außerhalb des Regelbereichs des Ventils zu einer Verschiebung des Rückstellmechanismus in Richtung des Bypass-Ventils führt, wobei ein Federelement, insbesondere eine Spiralfeder, den Rückstellmechanismus gegen den Mitnehmer drückt.

In einer zweiten Ausgestaltungsform bilden der Ventilteller und das Rückschlusselement des Bypass-Ventils eine Baueinheit. Dadurch lassen sich die Bauteileanzahl und der Bauraum des Bypass-Ventils weiter reduzierung. Um unter Berücksichtigung des Magnetflusses den Volumenstrom des Kühlmittels zu ermöglichen, sind am Umfang des Bypass-Ventils Aussparungen vorgesehen.

In vorteilhafter Weise ist der Rückstellmechanismus in der zweiten Ausgestaltungsform als eine Blattfeder ausgebildet, die mit einer axial ansteigenden Rückstellfläche des Mitnehmers derart in Wirkverbindung steht, dass die Rückstellfläche des Mitnehmers die Blattfeder außerhalb des Regelbereichs des Ventils durchbiegt, um den Ventilteller des Bypass-Ventils in den Dichtsitz zu verschieben. Zudem ist die Blattfeder an ihrem einen Ende fest mit dem Ventilgehäuse verbunden und wirkt mit ihrem anderen Ende auf die Baueinheit aus Ventilteller und Rückschlusselement, wobei das Verhältnis zwischen den Abschnitten vom einen Ende bis zum Berührungspunkt des Mitnehmers und vom anderen Ende bis zum Berührungspunkt des Mitnehmers größer oder gleich 1 zu 2 ist. Auf diese Weise ergeben sich neben der Reduzierung der Bauteileanzahl des Bypass-Ventils auch eine Reduzierung der Toleranzen im axialen Aufbau, ein Rückstellmechanismus, der das axiale Spiel des Bypass-Ventils kompensiert und vorhandene Toleranzen ausgleicht, eine sehr kompakte Bauweise sowie eine Vermeidung von bewegten Teilen im Rückstellmechanismus und dadurch bedingt eine sehr geringer Schmutzanfällig.

In einem dritten Ausführungsbeispiel ist der Rückstellmechanismus als ein Hebelmechanismus ausgebildet, der eine radiale Drehbewegung des Mitnehmers in eine axiale Hubbewegung umsetzt. Dabei weist der Hebelmechanismus einen ersten Hebel, einen zweiten Hebel und eine vorgespannte Feder auf, die über einen gemeinsamen, durch eine Achse definierten Drehpunkt derart in Wirkverbindung stehen, dass eine außerhalb des Regelbereichs des Ventils horizontal oder vertikal durch den Mitnehmer in den ersten Hebel eingeleitete Kraft zu einer auf die Feder wirkenden Kraft führt, die die Feder infolge einer Drehbewegung um den Drehpunkt auf den zweiten Hebel drückt, der mittels seiner in vertikaler Richtung wirkenden Kraft den Ventilteller des Bypass-Ventils in den Dichtsitz verschiebt. Hierdurch ergeben sich insbesondere Vorteile hinsichtlich der Feder, die das axiale Spiel des Bypass-Ventils kompensiert und vorhandene Toleranzen ausgleicht, dem Hebelmechanismus, der eine sehr kompakte Bauweise erlaubt, sowie der Drehbewegung, die weniger Schmutzanfällig ist als ein linearer Schiebemechanismus.

### Zeichnung

Die Erfindung wird im Folgenden anhand der Figuren beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination.

Es zeigen
- Fig. 1: ein erstes Ausführungsbeispiel eines Ventils in einer Übersichtsdarstellung,
- Fig. 2: das Ventil gemäß Figur 1 in einer ersten Schnittdarstellung,
- Fig. 3: ein zweites Ausführungsbeispiel des Ventils gemäß Figur 1 in einer weiteren Schnittdarstellung,
- Fig. 4: Schnittdarstellungen eines ersten Ausführungsbeispiels des erfindungsgemäßen Notlaufkonzepts des Ventils gemäß Figur 1,
- Fig. 5: schematische Darstellungen des ersten Ausführungsbeispiels des erfindungsgemäßen Rückstellmechanismus für ein in das Ventil gemäß Figur 1 integriertes Bypass-Ventil,
- Fig. 6: Schnittdarstellungen eines zweiten Ausführungsbeispiels des erfindungsgemäßen Notlaufkonzepts des Ventils gemäß Figur 1,
- Fig. 7: schematische Darstellungen des zweiten Ausführungsbeispiels des erfindungsgemäßen Rückstellmechanismus für ein in das Ventil gemäß Figur 1 integriertes Bypass-Ventil,
- Fig. 8: schematische Darstellung eines dritten Ausführungsbeispiels des erfindungsgemäßen Notlaufkonzepts des Ventils gemäß Figur 1,
- Fig. 9: schematische Darstellungen des dritten Ausführungsbeispiels des erfindungsgemäßen Rückstellmechanismus für ein in das Ventil gemäß Figur 1 integriertes Bypass-Ventil.

### Beschreibung der Ausführungsbeispiele

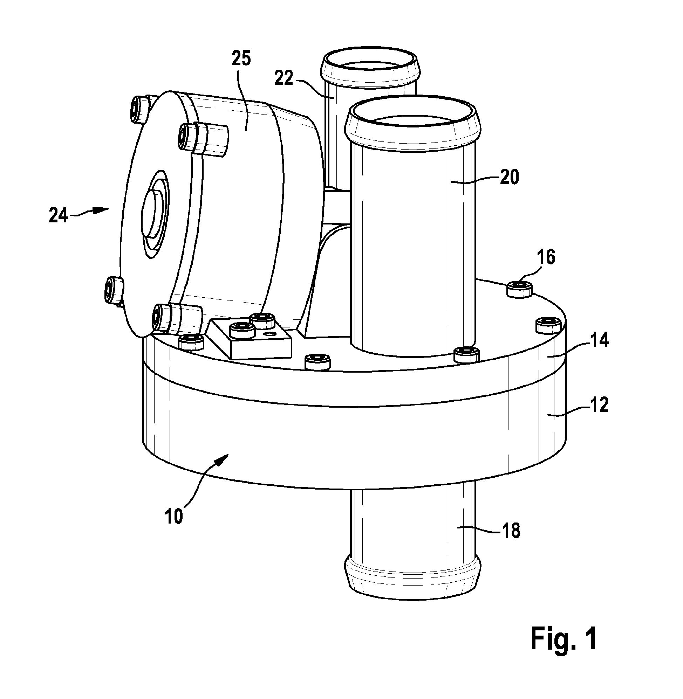

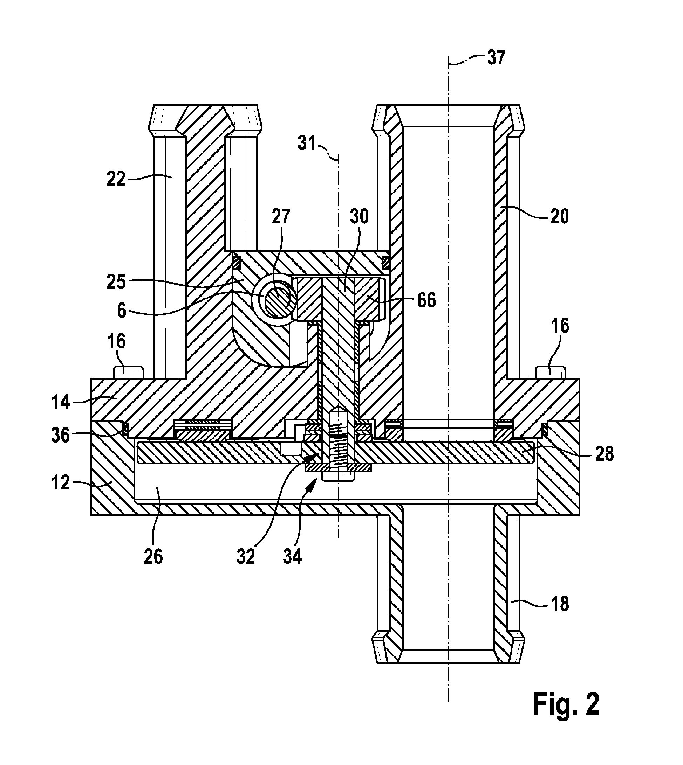

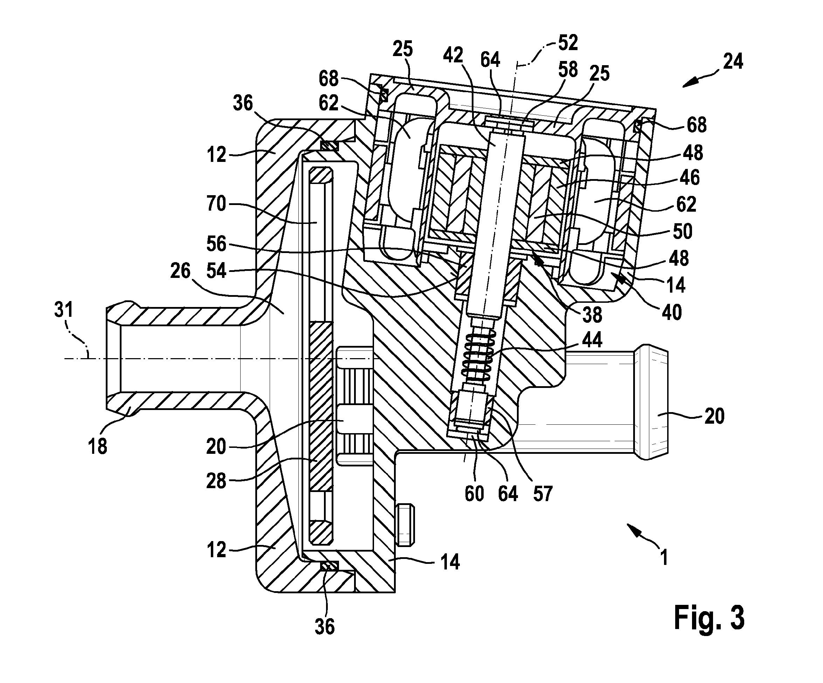

Fig. 1 zeigt ein Beispiel für ein Ventil 1 in einer Übersichtsdarstellung. Das Ventil 1 gemäß der Ausführungsform in Fig. 1 besitzt ein Gehäuse 10 mit einem Gehäuseunterteil 12 sowie einem Gehäuseoberteil 14, die über Verbindungsmittel 16, beispielsweise Schrauben, Nieten oder Rastmittel, fluiddicht miteinander verbunden sind. Insbesondere das Gehäuseunterteil 12 ist im Wesentlichen topfförmig ausgebildet, wie dies in den Figuren 2 und 3 dargestellt ist, und ermöglicht in seinem Inneren die Ausbildung einer Ventilkammer zur Aufnahme eines Ventilelementes. Das Gehäuseoberteil 14 kann ebenfalls topfförmig ausgebildet sein bzw. lediglich als eine Art Deckel im Gehäuseunterteil 12 ausgeformt sein. Am Gehäuseunterteil 12 angeformt ist der Stutzen eines Einlasskanals 18. Der Einlasskanal 18 bzw. der Stutzen kann dabei insbesondere einstückig mit dem Gehäuseunterteil 12 ausgeformt, beispielsweise in Kunststoff ausgebildet sein.

Mit dem Gehäuseoberteil 14 verbunden sind ein erster sowie ein zweiter Auslasskanal 20, 22. Mit Hilfe eines in der Ventilkammer angeordneten und noch näher zu beschreibenden Ventilelementes kann eine Verbindung zwischen dem Einlasskanal 18 und dem ersten bzw. zweiten Auslasskanal 20, 22 geöffnet, geschlossen und in gewünschter Weise variiert werden. Darüber hinaus weist das Ventil 1 noch einen Stellantrieb 24 zur Verstellung des Ventilelementes auf, der in Verbindung mit Fig. 3 noch näher beschrieben wird und der ein eigenes Antriebsgehäuse 25 aufweist, das mit dem Gehäuse 10, insbesondere dem Gehäuseoberteil 14, des Ventils 1 verschraubt ist.

Fig. 2 zeigt einen ersten Schnitt durch das Ventil 1, der in etwa senkrecht zur Zeichnungsebene der Fig. 1 verläuft. In der zwischen dem Gehäuseunterteil 12 und dem Gehäuseoberteil 14 ausgebildeten Ventilkammer 26 ist eine Ventilscheibe 28 als Ventilelement angeordnet. Eine Abtriebswelle 30 des in Fig. 3 näher dargestellten Stellantriebes 24 greift in eine zentrale Öffnung 32 der Ventilscheibe 28 ein. Durch entsprechende Sicherungsmittel 34 ist die Ventilscheibe 28 drehfest auf der Abtriebswelle 30 befestigt, so dass diese Welle auch als Antriebswelle der Ventilscheibe 28 dient. Die Sicherung der Ventilscheibe auf der Welle 30 kann beispielsweise durch eine in Fig. 2 dargestellte Verschraubung bzw. Verrastung erfolgen, oder aber auch durch ein Verpressen der Welle 30 in der zentralen Öffnung 32 der Ventilscheibe 28.

Zwischen dem Gehäuseunterteil 12 und dem Gehäuseoberteil 14 sind Dichtmittel, beispielsweise ein Dichtring 36 vorgesehen, um eine fluiddichte Verbindung zwischen den beiden Gehäuseteilen 12, 14 des Ventilgehäuses 10 zu gewährleisten. In den Ausführungsbeispielen der Figuren 1 und 2 sind der Einlasskanal 18 fluchtend auf einer gemeinsamen Achse 37 mit dem ersten Auslasskanal 20 und die Welle 30 entlang einer dazu parallel ausgerichteten Rotationsachse 31 angeordnet.

Fig. 3 zeigt eine zweite schematische Schnittansicht des Ventils 1 in einem weiteren Ausführungsbeispiel. Die Längsachsen des Einlasskanals 18 und des Auslasskanals 20 sind hier versetzt zueinander angeordnet. In dem zweiten Gehäuse 25 ist ein Rotor 38 und ein Stator 40 des als Elektromotor ausgebildeten Stellantriebs 24 angeordnet. Der Rotor 38 weist eine Rotorwelle 42 auf, auf der in einem ersten Bereich eine Schneckenverzahnung 44 und in einem zweiten Bereich ein Blechpaket 46 angeordnet sind. Die paketierten Bleche des Blechpakets 46 umfassen dabei radial die Rotorwelle 42 und werden axial durch zwei Blechhülsen 48 begrenzt. In dem Blechpaket 46 ist zumindest ein Magnet 50 angeordnet. Das Blechpaket 46 ist in seiner räumlichen Anordnung in einer Rotorwellenachse 52 von dem Bereich der Schneckenverzahnung 44 durch eine radiale Lageraufnahme 54 und dem darin angeordneten ersten radialen Lagerelement 56 abgetrennt. Die Flächen der Rotorwelle 42, die an den radialen Lagerelementen 56, 57 und den axialen Lagerelementen 58, 60 anliegen, weisen dabei einen höheren Härtegrad als die übrigen Flächen der Rotorwelle 42 auf. Die axialen Lagerelemente 58, 60 sind plattenförmig ausgeprägt, wobei das erste axiale Lagerelement 58 in dem Antriebsgehäuse 25 und das zweite axiale Lagerelement 60 in den Gehäuseoberteil 14 angeordnet sind. Der Rotor 38 weist an den Enden der Rotorwelle 42 jeweils einen Anlaufpilz 64 auf, der zur Abstützung der Lagerkräfte auf die axialen Lagerelemente 58, 60 dient. Der Rotor 38 sowie der Stator 40, werden durch das Antriebsgehäuse 25 und ein zweites Dichtelement 68 gegenüber der Umgebung abgeschlossen.

Der Stator 40 weist zumindest eine Spule 62 mit einer Mehrzahl von Wicklungen sowie nicht dargestellte Blechpakete auf. Die Spulen 62 erzeugen bei angelegter Spannung ein Magnetfeld, welches den Rotor 38 in Rotation um die Rotorwellenachse 52 versetzt. Die Spulen 62 können hierbei mit Wechselspannung betrieben werden oder elektronisch kommutiert werden. Durch die Rotation des Rotors 38 wird über die Schneckenverzahnung 44 ein Stirnrad 66 (vergleiche Fig. 2) angetrieben, welches mit der Ventilscheibe 28 verbunden ist. Die Ventilscheibe 28 weist zumindest eine Öffnung 70 auf, wobei durch ein Verdrehen der Ventilscheibe 28 die Öffnung 70 vor den Auslasskanal 20 gedreht wird. Je nach Stellung der Öffnung 70 vor dem Auslasskanal 20 wird die Durchflussfläche der Ventilscheibe 28 reguliert. Die Öffnung 70 ist mit ihrer Längsachse zur Rotationsachse 31 der Welle 30 bzw. der Ventilscheibe 28 versetzt angeordnet.

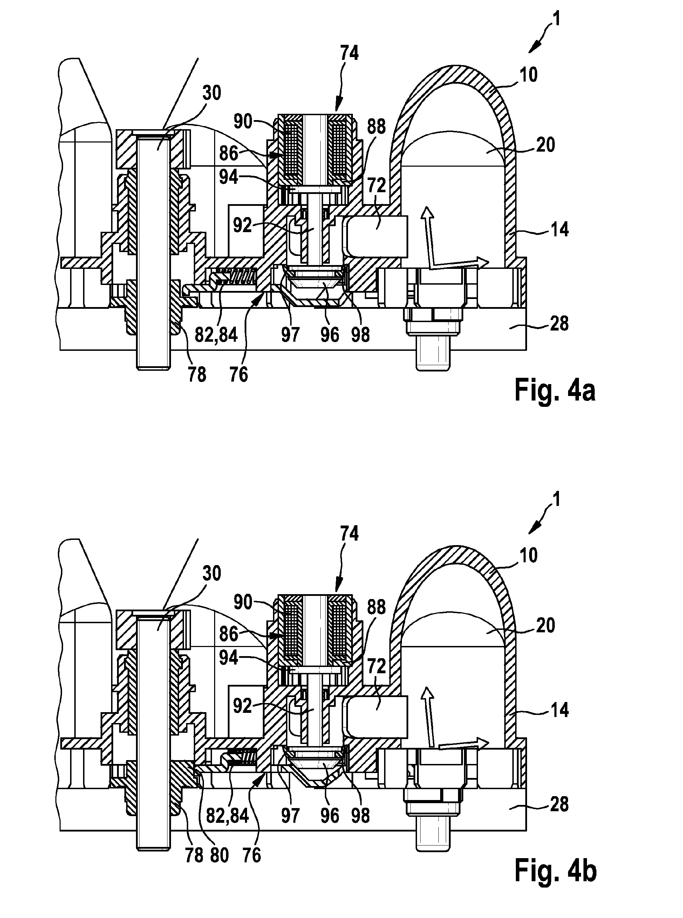

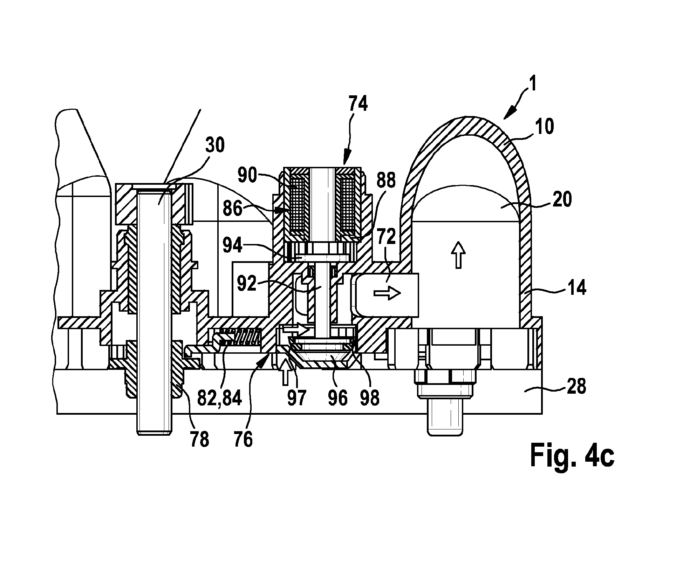

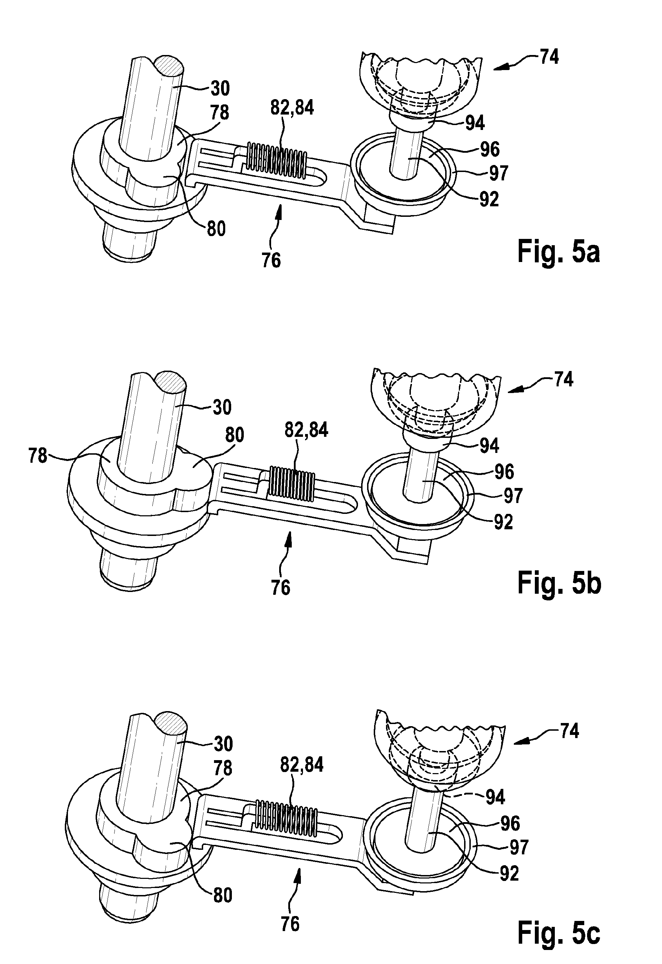

In den Figuren 4 bis 9 ist das erfindungsgemäße Notlaufkonzept des Ventils 1 dargestellt. In dem Ventilgehäuse 10, insbesondere in dem Gehäuseoberteil 14, sind zwischen dem nicht dargestellten Einlasskanal 18 und dem Auslasskanal 20 ein Bypass-Kanal 72 sowie ein Bypass-Ventil 74 angeordnet, über die der Einlasskanal 18 und der Auslasskanal 20 im Falle einer Überhitzung des Kühlmittels miteinander verbindbar sind. Im Normalbetrieb ist das Bypass-Ventil 74 geschlossen (Fig. 4a und 4b bzw. 5a und 5b). Falls das Kühlmittel infolge eines Blockierens der Ventilscheibe 28 im geschlossenen Zustand überhitzt, wird gemäß Fig. 4c bzw. 5c das Bypass-Ventil 74 geöffnet, so dass das Kühlmittel durch den Bypass-Kanal 72 in den Auslasskanal 20 strömen kann.

In den Figuren 4 und 5 ist ein Rückstellmechanismus 76 für das Bypass-Ventil 74 dargestellt, der einen mit der Welle 30 des Ventils 1 drehfest verbundenen Mitnehmer 78 umfasst. Der Mitnehmer 78 weist eine radiale Ausbuchtung 80 auf, die außerhalb des Regelbereichs des Ventils 1 zu einer Verschiebung des Rückstellmechanismus 76 in Richtung des Bypass-Ventils 74 führt. Dabei drückt ein Federelement 82, insbesondere eine Spiralfeder 84, den Rückstellmechanismus 76 gegen den Mitnehmer 78, um einen dauerhaften Reibkontakt zwischen Rückstellmechanismus 76 und Mitnehmer 78 zu gewährleisten. Unter der Bezeichnung "außerhalb des Regelbereichs" wird verstanden, dass sich die Öffnung 70 der Ventilscheibe 28 in einer Position befindet, in der der Volumenstrom des Kühlmittels zwischen Einlasskanal 18 und Auslasskanal 20, 22 unterbrochen ist.

Das Bypass-Ventil 74 wird über einen passiven Magnetkreis 86, der aus einem Haftmagneten 88 und einem Wicklungselement 90 besteht, geschlossen gehalten. Der Haftmagnet 88 hat jedoch nur dann eine ausreichend große Kraft, das Bypass-Ventil 74 geschlossen zu halten, wenn der Abstand eines mit dem Ventilkolben 92 des Bypass-Ventils 74 verbundenen Rückschlusselements 94 zum Magnetkreis 86 sehr klein, vorzugsweise < 0,1 mm, ist. Daher ist es wichtig, dass der Rückstellmechanismus 76 den Haftmagneten 88 beim Schließvorgang zum Anliegen bringt. Ein mit dem Rückschlusselement 94 über den Ventilkolben 92 verbundener Ventilteller 96 des Bypass-Ventils 74, der eine flexlible Ventildichtung 97 aufweist, wird dazu gemäß Fig. 4b bzw. 5b derart in einen Dichtsitz 98 verschoben, dass das Rückschlusselement 94 in den Wirkbereich des Magnetkreises 86 gelangt. Der Begriff "passiver Magnetkreis" resultiert aus der Eigenschaft, dass der Magnetkreis 86 des Bypass-Ventils 74 nicht in der Lage ist, dieses selbsttätig ohne äußere Einwirkung zu schließen. Vielmehr kann der passive Magnetkreis 86 das Bypass-Ventil 74 lediglich selbsttätig in der geschlossenen Position halten, wenn der Ventilteller 96 durch den Rückstellmechanismus 76 in seinen Dichtsitz 98 verschoben ist. In den Figuren 4c und 5c ist das Bypass-Ventil 74 im Falle des Notlaufs geöffnet. Dazu genügt es, die Energieversorgung des Wicklungselements 90 zu unterbrechen, so dass der Ventilteller 96 sich infolge einer Federkraft oder der Schwerkraft oder dergleichen in Richtung der Ventilscheibe 28 bewegen kann und das Kühlmittel durch den Bypass-Kanal 72 in den Auslasskanal 20 strömt.

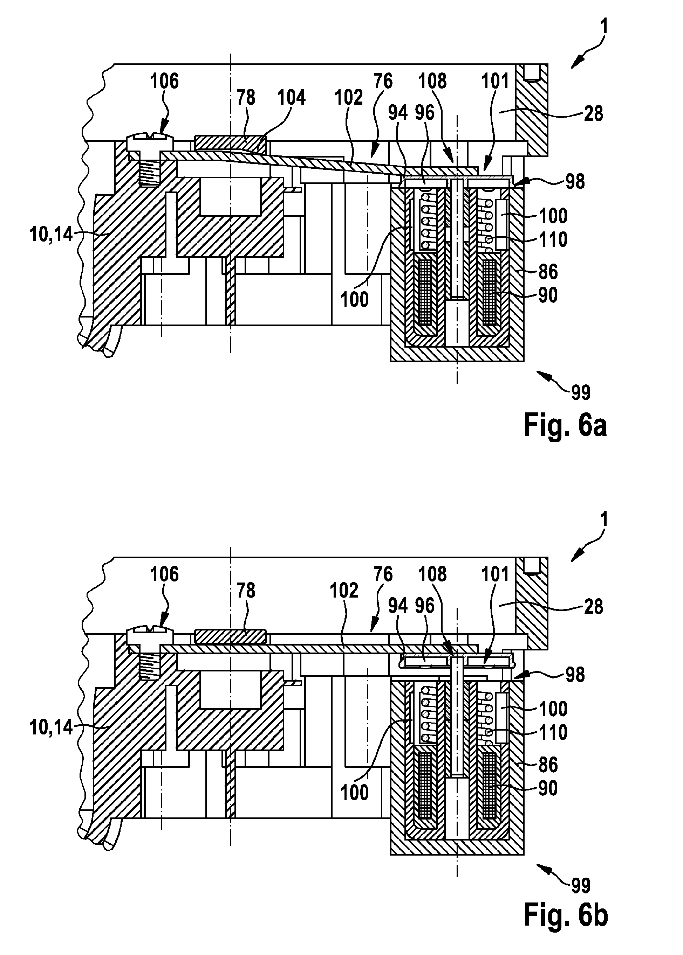

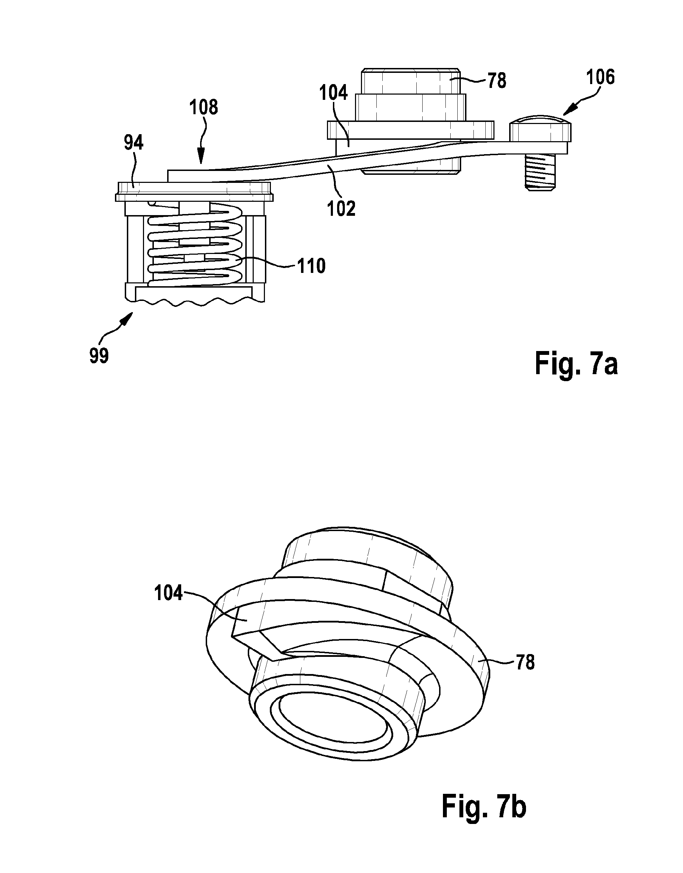

Die Figuren 6 und 7 zeigen eine alternative Ausgestaltung eines Bypass-Ventils 99, wobei Fig. 6a den geschlossenen (Normalbetrieb des Ventils 1) und Fig. 6b den geöffneten Zustand (Notlaufbetrieb des Ventils 1) darstellt. Der Magnetkreis 86 ist im Vergleich zum vorherigen Ausführungsbeispiel axial in Richtung des Ventilsitzes 98 verlängert. Am Umfang des Bypass-Ventils 99 werden unter Berücksichtigung des Magnetflusses Aussparungen 100 angebracht, um den Volumenstrom im Notlaufbetrieb des Ventils 1 zu ermöglichen. Ventilteller 96 und Rückschlusselement 94 bilden eine Baueinheit 101. Auf diese Weise ist eine sehr kompakte Bauform des Bypass-Ventils 99 möglich.

Der Rückstellmechanismus 76 ist als eine Blattfeder 102 ausgebildet ist, die mit einer axial ansteigenden Rückstellfläche 104 des Mitnehmers 78 derart in Wirkverbindung steht, dass die Rückstellfläche 104 des Mitnehmers 78 die Blattfeder 102 außerhalb des Regelbereichs des Ventils 1 durchbiegt, um den Ventilteller 96 des Bypass-Ventils 99 in den Dichtsitz 98 zu verschieben. Dazu ist die Blattfeder 102 an ihrem einen Ende 106 fest mit dem Ventilgehäuse 10, 14 verbunden und wirkt mit ihrem anderen Ende 108 auf die Baueinheit 101 aus Ventilteller 94 und Rückschlusselement 96. Das Verhältnis der Abschnitte vom einen Ende 106 bis zum Berührungspunkt des Mitnehmers 78 und vom anderen Ende 108 bis zum Berührungspunkt des Mitnehmers ist dabei größer oder gleich 1 zu 2. Auf diese Weise wird ein kleinen Hub (z.B. 1 mm) am Mitnehmer 78 in einen z.B. dreifach so großen Hub (z.B. 3 mm) an der Baueinheit 101 aus Ventilteller 94 und Rückschlusselement 96 umgesetzt.

Die Arbeitsweise des Rückstellmechanismus 76 ist Folgende: Der Mitnehmer 78 dreht mit seiner axial ansteigenden Rückstellfläche 104 über die Blattfeder 102. Die Blattfeder 102 wird dadurch Richtung Magnetkreis 86 des Bypass-Ventils 99 gebogen, bis Baueinheit 101 aus Ventilteller 94 und Rückschlusselement 96 am Dichtsitz 98 zur Anlage kommt. Wird jetzt der Mitnehmer 78 darüber hinaus weiter gedreht, so wird die Blattfeder 102 weiter durchgebogen, ohne Bauteile des Bypass-Ventils 99 zu überlasten. Das Bypass-Ventil 99 kann so sicher schließen; auftretende Toleranzen werden kompensiert. Der Rückstellmechanismus 76 kommt dabei ohne bewegliche Lagerstellen aus, was insbesondere in Medien, die mit Formsand durchsetzt sind, von Vorteil ist.

Wie bereits im vorherigen Ausführungsbeispiel, so ist der Magnetkreis 86 auch hier als passiver Magnetkreis ausgebildet, der das Bypass-Ventil 99 lediglich selbsttätig in der geschlossenen Position halten kann, wenn die Baueinheit 101 aus Ventilteller 94 und Rückschlusselement 96 durch den Rückstellmechanismus 76 in seinen Dichtsitz 98 verschoben ist. Ein Öffnen des Bypass-Ventils 99 im Notlaufbetrieb erfolgt durch Unterbrechung der Energieversorgung des Wicklungselements 90, so dass sich die Baueinheit 101 infolge einer durch eine Feder 110 hervorgerufenen Federkraft in Richtung der Ventilscheibe 28 bewegen kann.

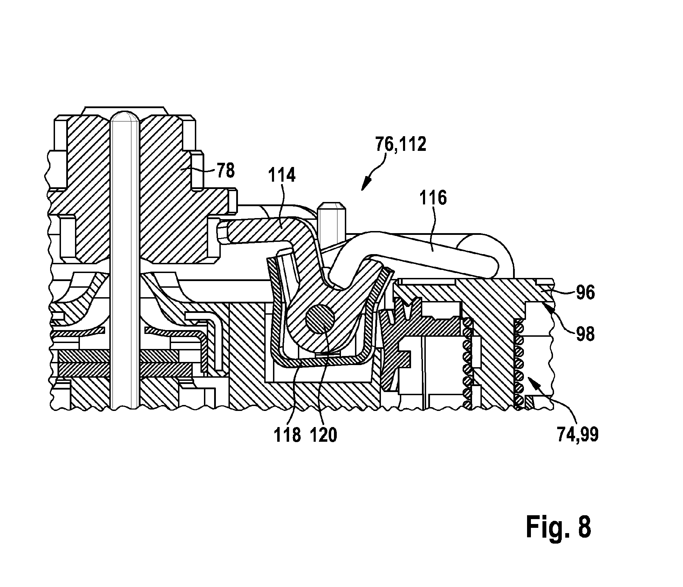

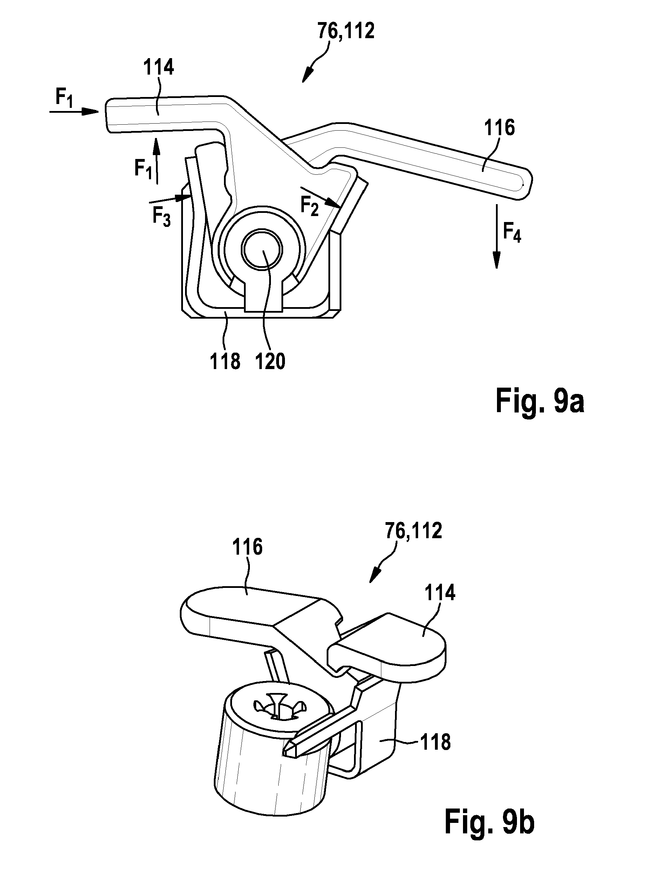

Ein drittes Ausführungsbeispiel des erfindungsgemäßen Notlaufkonzepts des Ventils 1 zeigen die Figuren 8 und 9. Der Rückstellmechanismus 76 ist hier als ein Hebelmechanismus 112 ausgebildet, der eine radiale Drehbewegung des Mitnehmers 78 in eine axiale Hubbewegung umsetzt. Der Hebelmechanismus 112 weist hierzu einen ersten Hebel 114, einen zweiten Hebel 116 und eine vorgespannte Feder 118 auf. Über einen gemeinsamen, durch eine Achse 120 definierten Drehpunkt stehen die beiden Hebel 114, 116 und die Feder 118 derart in Wirkverbindung, dass eine außerhalb des Regelbereichs des Ventils 1 horizontal oder vertikal durch den Mitnehmer 78 in den ersten Hebel 114 eingeleitete Kraft F₁ zu einer auf die Feder 118 wirkenden Kraft F₂ führt, die die Feder 118 infolge einer Drehbewegung um den Drehpunkt auf den zweiten Hebel 116 drückt (Kraft F₃), der mittels seiner in vertikaler Richtung wirkenden Kraft F₄ den Ventilteller 96 des Bypass-Ventils 74, 99 in den Dichtsitz 98 verschiebt.

Auf diese Weise können ein axiales Spiel des Bypass-Ventils 74, 99 durch die Feder 118 kompensiert und eventuell vorhandene Toleranzen ausgeglichen werden. Weiterhin ergibt sich durch den Hebelmechanismus 112 eine sehr kompakte Bauweise. Aufgrund der Drehbewegung ist dieser Rückstellmechanismus zudem weniger schmutzanfällig als ein linearer Schiebemechanismus.

Durch die Hebelverhältnisse der beiden Hebel 114, 116 bezogen auf den Drehpunkt kann ein relativ kleiner erster Betätigungsweg in einen relativ großen Schaltweg umgesetzt werden. Stößt der zweite Hebel 116 auf einen Anschlag, so kann dennoch der erste Hebel 114 weiter bewegt werden, ohne dass dabei unzulässig hohe Kräfte auf den Hebelmechanismus 112 wirken. Es wird lediglich die Feder 118 durch die Kraft F₂ weiter gespannt. Die Feder 118 hat die zusätzliche Funktion, den Hebelmechanismus 112 in einer stabilen Ruhelage zu halten.

## Patentansprüche

1. Ventil (1) zur Steuerung von Volumenströmen eines Kühlmittels in einem Heiz- und/oder Kühlsystem eines Kraftfahrzeuges mit einem Ventilgehäuse (10, 12, 14, 25) mit mindestens einem Einlasskanal (18) sowie mindestens einem Auslasskanal (20, 22), wobei in dem Ventilgehäuse (10, 12, 14) mindestens eine um die Achse (31) einer Welle (30) drehbar angeordnete Ventilscheibe (28) vorhanden ist, die die Verbindung zwischen dem mindestens einem Einlasskanal (18) und dem mindestens einen Auslasskanal (20, 22) des Ventils (1) beeinflusst, **dadurch gekennzeichnet, dass** in dem Ventilgehäuse (10, 12, 14) zwischen dem mindestens einen Einlasskanal (18) und dem mindestens einen Auslasskanal (20, 22) ein Bypass-Kanal (72) sowie ein Bypass-Ventil (74, 99) mit einem passiven Magnetkreis (86) sowie einem durch die Ventilscheibe (28) angetriebenen Rückstellmechanismus (76) angeordnet sind, über die der mindestens eine Einlasskanal (18) und der mindestens eine Auslasskanal (20, 22) im Falle einer Überhitzung des Kühlmittels miteinander verbindbar sind.

2. Ventil (1) nach Anspruch 1, **dadurch gekennzeichnet, dass** der passive Magnetkreis (86) des Bypass-Ventils (74, 99) einen kleinen Haftmagneten (90) enthält, der lediglich zum Halten des Bypass-Ventils (74, 99) in einer definierten Endposition dient.

3. Ventil (1) nach einem der vorhergehenden Ansprüche, **dadurch gekennzeichnet, dass** der passive Magnetkreis (86) des Bypass-Ventils (74, 99) einen Verstellbereich von wenigen Zehntel Millimetern, insbesondere < 0,1 mm, aufweist.

4. Ventil (1) nach einem der vorhergehenden Ansprüche, **dadurch gekennzeichnet, dass** der Rückstellmechanismus (76) einen mit der Welle (30) drehfest verbundenen Mitnehmer (78) umfasst, der außerhalb des Regelbereichs des Ventils (1) einen mit einem Rückschlusselement (94) verbundenen Ventilteller (96) des Bypass-Ventils (74) derart in einen Dichtsitz (98) verschiebt, dass das Rückschlusselement (94) in den Wirkbereich des Magnetkreises (86) gelangt.

5. Ventil (1) nach Anspruch 4, **dadurch gekennzeichnet, dass** der passive Magnetkreis (86) das Bypass-Ventil (74) selbsttätig in der geschlossenen Position hält, wenn der Ventilteller (96) durch den Rückstellmechanismus (76) in seinen Dichtsitz (98) verschoben ist.

6. Ventil (1) nach einem der vorhergehenden Ansprüch 4 oder 5, **dadurch gekennzeichnet, dass** der Mitnehmer (78) eine radiale Ausbuchtung (80) aufweist, die außerhalb des Regelbereichs des Ventils (1) zu einer Verschiebung des Rückstellmechanismus (76) in Richtung des Bypass-Ventils (1) führt, und dass ein Federelement (82), insbesondere eine Spiralfeder (84), den Rückstellmechanismus (76) gegen den Mitnehmer (78) drückt.

7. Ventil (1) nach Anspruch 4, **dadurch gekennzeichnet, dass** der Ventilteller (96) und das Rückschlusselement (94) des Bypass-Ventils (99) eine Baueinheit (101) bilden.

8. Ventil (1) nach Anspruch 6, **dadurch gekennzeichnet, dass** am Umfang des Bypass-Ventils (99) Aussparungen (100) vorhanden sind, die unter Berücksichtigung des Magnetflusses den Volumenstrom des Kühlmittels ermöglichen.

9. Ventil (1) nach einem der vorhergehenden Ansprüche 4 oder 5, **dadurch gekennzeichnet, dass** der Rückstellmechanismus (76) als eine Blattfeder (102) ausgebildet ist, die mit einer axial ansteigenden Rückstellfläche (104) des Mitnehmers (78) derart in Wirkverbindung steht, dass die Rückstellfläche (104) des Mitnehmers (78) die Blattfeder (102) außerhalb des Regelbereichs des Ventils (1) durchbiegt, um den Ventilteller (94) des Bypass-Ventils (99) in den Dichtsitz (98) zu verschieben.

10. Ventil (1) nach Anspruch 9, **dadurch gekennzeichnet, dass** die Blattfeder (102) an ihrem einen Ende (106) fest mit dem Ventilgehäuse (10, 12, 14) verbunden ist und mit ihrem anderen Ende (108) auf die Baueinheit (101) aus Ventilteller (94) und Rückschlusselement (96) wirkt, wobei das Verhältnis der Abschnitte vom einen Ende (106) bis zum Berührungspunkt des Mitnehmers (78) und vom anderen Ende (108) bis zum Berührungspunkt des Mitnehmers (78) größer oder gleich 1 zu 2 ist.

11. Ventil (1) nach einem der vorhergehenden Ansprüche 4 oder 5, **dadurch gekennzeichnet, dass** der Rückstellmechanismus (76) als ein Hebelmechanismus (112) ausgebildet ist, der eine radiale Drehbewegung des Mitnehmers (78) in eine axiale Hubbewegung umsetzt.

12. Ventil (1) nach Anspruch 11, **dadurch gekennzeichnet, dass** der Hebelmechanismus (112) einen ersten Hebel (114), einen zweiten Hebel (116) und eine vorgespannte Feder (118) aufweist, die über einen gemeinsamen, durch eine Achse (120) definierten Drehpunkt derart in Wirkverbindung stehen, dass eine außerhalb des Regelbereichs des Ventils (1) horizontal oder vertikal durch den Mitnehmer (78) in den ersten Hebel (114) eingeleitete Kraft (F₁) zu einer auf die Feder (118) wirkenden Kraft (F₂) führt, die die Feder (118) infolge einer Drehbewegung um den Drehpunkt auf den zweiten Hebel (116) drückt, der mittels seiner in vertikaler Richtung wirkenden Kraft (F₄) den Ventilteller (96) des Bypass-Ventils (74, 99) in den Dichtsitz (98) verschiebt.

## Claims

1. Valve (1) for controlling volumetric flows of a coolant in a heating and/or cooling system of a motor vehicle having a valve housing (10, 12, 14, 25) with at least one inlet channel (18) and at least one outlet channel (20, 22), there being at least one valve plate (28) in the valve housing (10, 12, 14), which valve plate (28) is arranged such that it can be rotated about the axis (31) of a shaft (30) and influences the connection between the at least one inlet channel (18) and the at least one outlet channel (20, 22) of the valve (1), **characterized in that** a bypass channel (72) and a bypass valve (74, 99) with a passive magnetic circuit (86) and a restoring mechanism (76) which is driven by the valve plate (28) are arranged in the valve housing (10, 12, 14) between the at least one inlet channel (18) and the at least one outlet channel (20, 22), via which bypass channel (72) and bypass valve (74, 99) the at least one inlet channel (18) and the at least one outlet channel (20, 22) can be connected to one another in the case of overheating of the coolant.

2. Valve (1) according to Claim 1, **characterized in that** the passive magnetic circuit (86) of the bypass valve (74, 99) contains a small holding magnet (90) which serves merely to hold the bypass valve (74, 99) in a defined end position.

3. Valve (1) according to one of the preceding claims, **characterized in that** the passive magnetic circuit (86) of the bypass valve (74, 99) has an adjustment range of a few tenths of millimetres, in particular < 0.1 mm.

4. Valve (1) according to one of the preceding claims, **characterized in that** the restoring mechanism (76) comprises a driver (78) which is connected fixedly to the shaft (30) so as to rotate with it and, outside the control range of the valve (1), displaces a valve head (96), connected to a return element (94), of the bypass valve (74) into a sealing seat (98) in such a way that the return element (94) passes into the active region of the magnetic circuit (86).

5. Valve (1) according to Claim 4, **characterized in that** the passive magnetic circuit (86) holds the bypass valve (74) automatically in the closed position if the valve head (96) has been displaced into its sealing seat (98) by way of the restoring mechanism (76).

6. Valve (1) according to either of the preceding Claims 4 and 5, **characterized in that** the driver (78) has a radial bulge (80) which, outside the control range of the valve (1), leads to a displacement of the restoring mechanism (76) in the direction of the bypass valve (1), and **in that** a spring element (82), in particular a helical spring (84), presses the restoring mechanism (76) against the driver (78).

7. Valve (1) according to Claim 4, **characterized in that** the valve head (96) and the return element (94) of the bypass valve (99) form one structural unit (101).

8. Valve (1) according to Claim 6, **characterized in that** there are cut-outs (100) on the circumference of the bypass valve (99), which cut-outs (100) make the volumetric flow of the coolant possible with the magnetic flux being taken into consideration.

9. Valve (1) according to either of the preceding Claims 4 and 5, **characterized in that** the restoring mechanism (76) is configured as a leaf spring (102) which is operatively connected to an axially rising restoring face (104) of the driver (78) in such a way that the restoring face (104) of the driver (78) deflects the leaf spring (102) outside the control range of the valve (1), in order to displace the valve head (94) of the bypass valve (99) into the sealing seat (98).

10. Valve (1) according to Claim 9, **characterized in that** the leaf spring (102) is connected fixedly at its one end (106) to the valve housing (10, 12, 14) and acts with its other end (108) on the structural unit (101) comprising the valve head (94) and the return element (96), the ratio of the sections from one end (106) as far as the point of contact of the driver (78) and from the other end (108) as far as the point of contact of the driver (78) being greater than or equal to 1:2.

11. Valve (1) according to either of the preceding Claims 4 and 5, **characterized in that** the restoring mechanism (76) is configured as a lever mechanism (112) which converts a radial rotational movement of the driver (78) into an axial reciprocating movement.

12. Valve (1) according to Claim 11, **characterized in that** the lever mechanism (112) has a first lever (114), a second lever (116) and a prestressed spring (118) which are operatively connected via a common pivot point which is defined by an axis (120), in such a way that a force (F₁) which is introduced horizontally or vertically by the driver (78) into the first lever (114) outside the control range of the valve (1) leads to a force (F₂) which acts on the spring (118) and, as a consequence of a rotational movement about the pivot point, presses the spring (118) onto the second lever (116) which, by means of its force (F₄) which acts in the vertical direction, displaces the valve head (96) of the bypass valve (74, 99) into the sealing seat (98).

## Revendications

1. Soupape (1) pour commander des débits volumiques d'un réfrigérant dans un système de chauffage et/ou de refroidissement d'un véhicule automobile, comprenant un boîtier de soupape (10, 12, 14, 25) avec au moins un canal d'entrée (18) ainsi qu'au moins un canal de sortie (20, 22), au moins un disque de soupape (28) disposé de manière à pouvoir tourner autour de l'axe (31) d'un arbre (30) étant prévu dans le boîtier de soupape (10, 12, 14), lequel influence la connexion entre l'au moins un canal d'entrée (18) et l'au moins un canal de sortie (20, 22) de la soupape (1), **caractérisée en ce qu'**un canal de dérivation (72) ainsi qu'une soupape de dérivation (74, 99) avec un circuit magnétique passif (86) ainsi qu'un mécanisme de rappel (76) entraîné par le disque de soupape (28) sont disposés dans le boîtier de soupape (10, 12, 14) entre l'au moins un canal d'entrée (18) et l'au moins un canal de sortie (20, 22), par le biais desquels l'au moins un canal d'entrée (18) et l'au moins un canal de sortie (20, 22) peuvent être connectés l'un à l'autre dans le cas d'une surchauffe du réfrigérant.

2. Soupape (1) selon la revendication 1, **caractérisée en ce que** le circuit magnétique passif (86) de la soupape de dérivation (74, 99) contient un petit aimant adhésif (90) qui sert uniquement à retenir la soupape de dérivation (74, 99) dans une position finale définie.

3. Soupape (1) selon l'une quelconque des revendications précédentes, **caractérisée en ce que** le circuit magnétique passif (86) de la soupape de dérivation (74, 99) présente une plage de réglage de quelques dixièmes de millimètre, en particulier < 0,1 mm.

4. Soupape (1) selon l'une quelconque des revendications précédentes, **caractérisée en ce que** le mécanisme de rappel (76) comprend un dispositif d'entraînement (78) connecté de manière solidaire en rotation à l'arbre (30), lequel déplace, à l'extérieur de la plage de réglage de la soupape (1), un plateau de soupape (96) de la soupape de dérivation (74) connecté à un élément de reflux (94) dans un siège d'étanchéité (98) de telle sorte que l'élément de reflux (94) parvienne dans la plage d'action du circuit magnétique (86).

5. Soupape (1) selon la revendication 4, **caractérisée en ce que** le circuit magnétique passif (86) retient la soupape de dérivation (74) automatiquement dans la position fermée lorsque le plateau de soupape (96) est déplacé par le mécanisme de rappel (76) dans son siège d'étanchéité (98).

6. Soupape (1) selon l'une quelconque des revendications 4 ou 5, **caractérisée en ce que** le dispositif d'entraînement (78) présente une partie bombée radiale (80) qui conduit à l'extérieur de la plage de réglage de la soupape (1) à un déplacement du mécanisme de rappel (76) dans la direction de la soupape de dérivation (1), et **en ce qu'**un élément de ressort (82), en particulier un ressort spiral (84), presse le mécanisme de rappel (76) contre le dispositif d'entraînement (78).

7. Soupape (1) selon la revendication 4, **caractérisée en ce que** le plateau de soupape (96) et l'élément de reflux (94) de la soupape de dérivation (99) forment une unité structurelle (101).

8. Soupape (1) selon la revendication 6, **caractérisée en ce qu'**à la périphérie de la soupape de dérivation (99) sont prévus des évidements (100), lesquels permettent le débit volumique du réfrigérant en tenant compte du flux magnétique.

9. Soupape (1) selon l'une quelconque des revendications 4 ou 5, **caractérisée en ce que** le mécanisme de rappel (76) est réalisé sous forme de ressort à lames (102) qui est en liaison fonctionnelle avec une surface de rappel (104) du dispositif d'entraînement (78) montant axialement, de telle sorte que la surface de rappel (104) du dispositif d'entraînement (78) fasse fléchir le ressort à lames (102) à l'extérieur de la plage de réglage de la soupape (1), afin de déplacer le plateau de soupape (94) de la soupape de dérivation (99) dans le siège d'étanchéité (98).

10. Soupape (1) selon la revendication 9, **caractérisée en ce que** le ressort à lames (102) au niveau de l'une de ses extrémités (106) est connecté fixement au boîtier de soupape (10, 12, 14) et au niveau de son autre extrémité (108) agit sur l'unité structurelle (101) constituée du plateau de soupape (94) et de l'élément de reflux (96), le rapport des sections depuis une extrémité (106) jusqu'au point de contact du dispositif d'entraînement (78) et depuis l'autre extrémité (108) jusqu'au point de contact du dispositif d'entraînement (78) étant supérieur ou égal à 1 à 2.

11. Soupape (1) selon l'une quelconque des revendications 4 ou 5, **caractérisée en ce que** le mécanisme de rappel (76) est réalisé sous forme de mécanisme à levier (112) qui convertit un mouvement de rotation radial du dispositif d'entraînement (78) en un mouvement de levage axial.

12. Soupape (1) selon la revendication 11, **caractérisée en ce que** le mécanisme à levier (112) présente un premier levier (114), un deuxième levier (116) et un ressort précontraint (118), lesquels sont en liaison fonctionnelle par le biais d'un pivot commun défini par un axe (120) de telle sorte qu'une force (F₁) introduite à l'extérieur de la plage de réglage de la soupape (1) horizontalement ou verticalement par le dispositif d'entraînement (78) dans le premier levier (114) produise une force (F₂) agissant sur le ressort (118), laquelle presse le ressort (118) du fait d'un mouvement de rotation autour du pivot sur le deuxième levier (116), lequel, au moyen de sa force (F₄) agissant dans la direction verticale, déplace le plateau de soupape (96) de la soupape de dérivation (74, 99) dans le siège d'étanchéité (98).
